# EUROPEAN PATENT APPLICATION

(11) **EP 3 214 336 A1**
(43) Date of publication of application: **06.09.2017**
(21) Application number: 17157752.1
(22) Date of filing: 24.02.2017
(51) Int. Cl.: F16F 7/108, F16F 15/04, F16F 1/373, F16F 9/30, F16F 1/366

(54) **COUPLING-DAMPING LAYER AT VIBRATION INTERFACE**

(30) Priority: 24.02.2016 US 201662299015 P
(71) Applicant: Quiet Rail Limited, Shatin, N.T. (HK)
(72) Inventor: HO, Wai Lun, Hong Kong (HK)
(74) Representative: Marks & Clerk (Luxembourg) LLP

(57) **Abstract**

A coupling-damping thin layer (100) of gap-filling material (102) to be used at interfaces under compression and the thickness control techniques. The thickness of the layer is proposed to be controlled by an insertion of an elastic material (101) into the gap-filling material (102). By selection of appropriate stiffness of the elastic material (101) and the viscosity of the gap-filling material (102), the dynamic properties of the layer can be controlled to optimise vibration dissipation through hysteresis loop damping.

## Description

### FIELD OF INVENTION

This invention is related to a thin layer of a solid gap-filling material for coupling on vibrating objects which enhances coupling for small-amplitude (<1µm) vibration and provides hysteresis loop damping for strong-force vibration, and the techniques to control its thickness, viscoelastic and viscoplastic properties when the vibration force is stronger than the plastic flow yield value of the gap-filling material.

### BACKGROUND OF INVENTION

Gap-filling material like beewax is widely used for vibration sensor fixing onto the measurement surface to ensure vibration transmission to the sensor. For this purpose, the thickness of the gap-filling layer does need to be controlled. Besides, usual gap-filling materials such as beewax tend to creep or flow out from the contact interface under compression force in one or multiple oscillation cycles. This may cause a loosing of the mounting and may hinder the vibration coupling function of the layer.

Other than the application in measurement, the mounting vibration damping system on vibration object may also require some gap-filling material for transferring vibration to enhance the performance of damper and preventing the impact between vibrating object and vibration damping system to avoid noise production. However, it is restricted by the limitation of decreasing thickness as stated above. A short lifetime of the gap-filling material limits the applications thereof.

Particularly in rail, even though vibration amplitude at high frequency (100 to 5000Hz) is as small as the order of microns, loud noise such as squeal from train wheels and rolling noise from rail is still radiated. For railway damper, conventional methods of gap-filling layer application do not control the interface thickness. Thin layer is difficult to handle and not able to provide sufficient connected surface area for rough surface, while thick layer produces continuous spillage at the edges of the interface gap by the compressive mounting force. Such process takes hours or days until the 2 surfaces are in contact with each other.

Existing gap filling technique cannot control the thickness of coupling layer due to strong mounting force continuously compressing the layer to be thinner and thinner until the two interface objects touching each other.

### SUMMARY OF INVENTION

This invention is a vibration coupling layer with thickness control to solve the above problem. With such layer inserted between the vibrating surface and vibration control device, the working efficiency of vibration coupling layer and hence of the vibration control could be maintained over a prolonged period of time. Apart from the application as a vibration coupling layer stated above, the invention can also act as a damping layer to modify the overall dynamic properties.

The invention is a coupling-damping thin layer of gap-filling material to be used at interfaces under compression and the thickness control techniques. The thickness of the layer is proposed to be controlled by an insertion of an elastic material into the gap-filling material. By selection of appropriate stiffness of the elastic material and the viscosity of the gap-filling material, the dynamic properties of the layer can be controlled to optimise vibration dissipation through hysteresis loop damping. By insertion of elastic materials, such as webbing, into the gap-filling material, the thickness of the gap-filling layer at interfaces under compression can be controlled without hindering the gap filling process. Optionally, the elastic material can be a layer of woven or nonwoven webbing with different elastic properties at different vibration directions, so that the elastic properties of the two orthogonal shearing directions of the layer can be different.

The thickness control solves the loosing problem of traditional vibration coupling layer under continuous compressive force, while the gap-filling properties and rigid connection at high frequency is across the two working surfaces maintained. Therefore, the vibration coupling function in the compression/tension directions is improved by this invention.

The invention of a coupling-damping thin layer of gap-filling material can provide adhesive force. The invention is capable of easy installation between the surfaces of vibrating object and device to be mounted on vibrating object. During installation, the thin layer gap-filling material is compressed to fill up any minor mismatch of the two interfacing surfaces by applying strong compression force to ensure plastic flow of the gap-filling material. In normal working state, the vibration of measurement surface is significantly below the yield point of the coupling layer, therefore the coupling layer appears to be a rigid connection for good coupling of vibration measurement.

While, the invention can also serve as a damping layer in the shearing, compression or tension directions to optimise the overall dynamic properties of vibration control system and enhance the overall energy dissipation. The invention improves performance of all vibration dampers by introduction of additional dissipation at the coupling interface through hysteresis damping at the layer by deformation cycles when the vibration force is stronger than the plastic flow yield value of the gap-filling material. It may be specifically useful for tuned mass damper where small-amplitude vibration is amplified by tuned mass damping process and make the coupling reaction force being stronger than the plastic flow yield value of the gap-filling material for hysteresis loop damping.

### BRIEF DESCRIPTION OF THE DRAWINGS

The attached drawings illustrate some possible arrangements of the invention while other embodiments of the invention are possible. The particularity of the drawing should not supersede the generality of the preceding description of the invention.
Figure 1 shows a cross-sectional view of the Invention (Item 100).
Figure 2 shows a top view of the Invention (Item 100).
Figure 3 shows a typical hysteresis loop of load-displacement relationship in shearing directions.
Figure 4 illustrates an application of the invention in tuned mass damper (single oscillation mass).
Figure 5 illustrates an application of the invention in tuned mass damper (multiple oscillation masses).

### DETAILED DESCRIPTION OF THE INVENTION

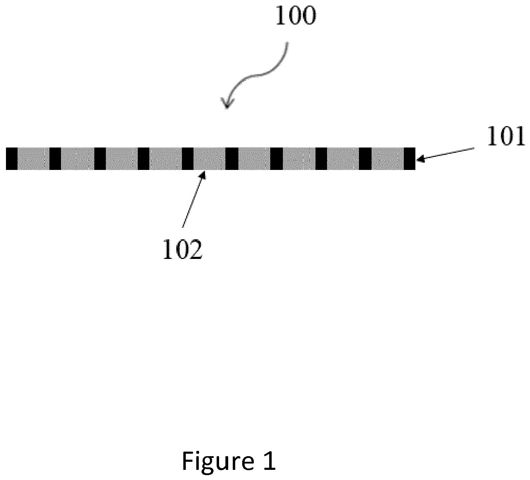

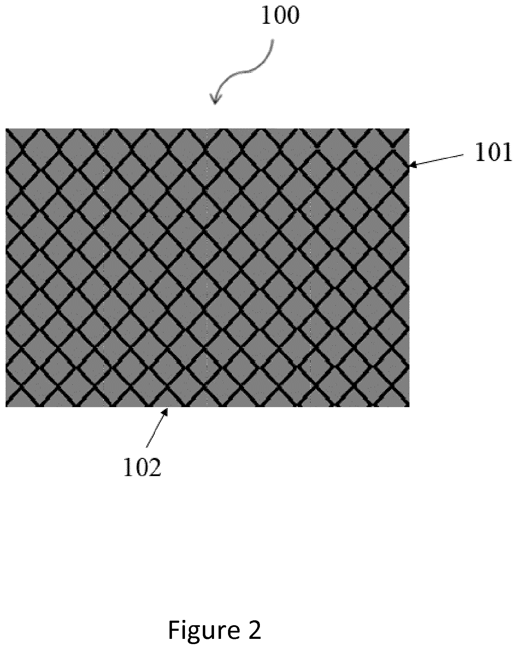

The invention comprises elastic material inserted into a gap-filling material, as illustrated in Figure 1 and Figure 2. Item 101 represents the elastic material, such as webbing in a mesh structure. Item 102 represents the gap-filling material. Item 101 is inserted into Item 102 to give the overall structure of the coupling-damping thin layer (Item 100). A mesh of webbing forms the main structure of the thin layer in order to limit the compression of attached gap-filling material to a finite thickness. On the other hand, the gap-filling material serves the main function of vibration coupling and dynamic properties of the whole structure. Elastic property of the inserted elastic material allows transmission of both shearing force and compressive force in the respective directions. Inheriting the physical property of gap-filling material, the design is also capable of direct shearing flow.

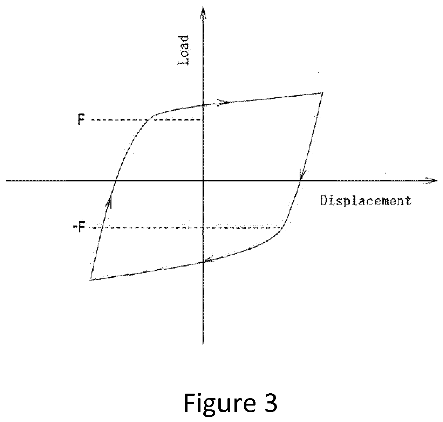

A typical hysteresis loop of load-displacement relationship in shearing directions is shown in Figure 3. For a given force, which is smaller than F, the coupling-damping thin layer (Item 100) acts as an elastic material and be compressed. When the force is beyond F, the layer will start to flow. Later, when the force is decreased, it will return to be elastic and be recovered.

The insertion of elastic material to the gap-filling layer solves the problem of excess flowing out of coupling material. The elastic material, such as webbing, provides constraint to limit the flowing out of gap-filling material and help controlling the layer thickness with time without hindering the gap filling process of the gap-filling material. With such design inserted between two working surfaces, the working efficiency of vibration coupling layer and hence of the vibration control could be maintained over a prolonged period of time.

Apart from the application as a vibration coupling layer between the vibrating surface and the vibration control device in compression/tension direction, the invention can also act as a damping layer to modify the overall dynamic properties. For example, when it is used in tuned mass damper, the plastic flow or the viscous flow property of the gap-filling material can allow extra energy dissipation, and hence optimizing and enhancing the energy dissipation in oscillation cycles.

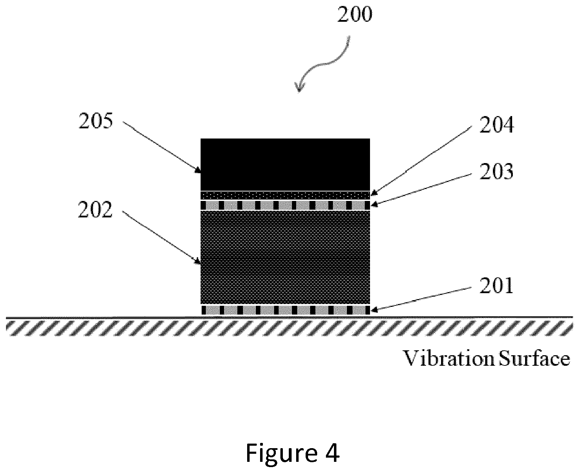

First embodiment illustrates an application of the invention as in tuned mass damper with single oscillation mass in Figure 4 where the coupling damping layers are integrated into a vibration damper, such as tuned mass damper, at different interfaces serving for different functions. The overall assembly (Item 200) illustrates the application of modified tuned mass damper to a vibration surface. Item 201 represents a coupling-damping thin layer applied, mainly to serve the first function as a vibration coupling layer to enhance the vibration transmission from the vibration surface to the vibration controlling device, i.e. the tuned mass damper in this example. Item 202 represents the mounting of tuned mass damper to the vibration surface. The mounting could be magnetic, clamped, or by other means. Item 203 represents another coupling-damping thin layer, mainly to serve the second function as a damping layer to modify and optimise the overall dynamic properties of the tuned mass damper. Item 204 and Item 205 represent the elastic material and oscillation mass of the tuned mass damper design. Item 201 and Item 203 can be optimised individually to serve the intended purposes.

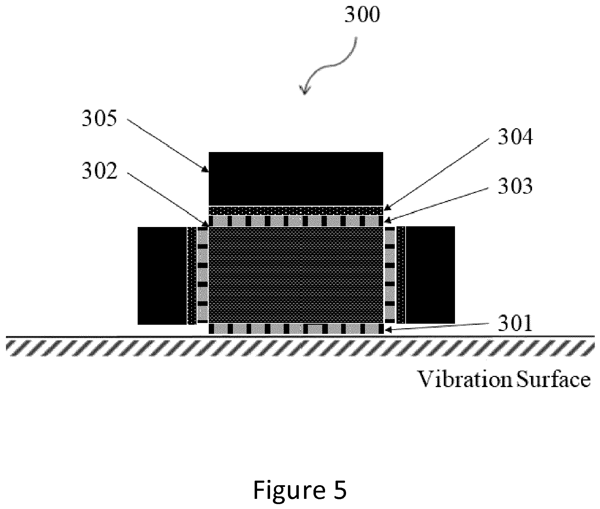

Second embodiment illustrates an application of the invention as in tuned mass damper with multiple oscillation masses in Figure 5 where multiple oscillation masses are included in different directions instead of using a single oscillation mass as in Figure 4. Item 301 represents a coupling-damping thin layer applied, mainly to serve the first function as a vibration coupling layer to enhance the vibration transmission from the vibration surface to the tuned mass damper. Item 302 represents the mounting of tuned mass damper to the vibration surface. The mounting could be magnetic, clamped, or by other means. Item 303 represents another coupling-damping thin layer, mainly to serve the second function as a damping layer to modify and optimise the overall dynamic properties of the tuned mass damper. Item 304 and Item 305 represent the elastic material and the multiple oscillation masses of the tuned mass damper design. Item 301 and Item 303 can be optimised individually to serve the intended purposes.

As illustrated in Figure 5, the invention could be applied in a tuned mass damper to modify the overall dynamic properties of the damper. Item 303 illustrates the application of modified tuned mass damper to a vibration surface while Item 304 and Item 305 represents the elastic material and oscillation masses of the tuned mass damper design. Considering the original tuned mass damper system without damping layer Item 303, although the tuned mass damper works very effectively at the resonance frequency of the free vibration surface, the resonance frequencies from the damped system may hinder the overall performance of the tuned mass damper. Through applying and optimising the damping layer Item 303 to the tuned mass damper design, the overall dynamic properties of the tuned mass damping system could be fine-tuned to achieve the desired outcome.

## Claims

1. Coupling-damping layer, formed by means of fusing solid gap filling material with elastic webbing, applied at vibration interface, wherein
elastic webbing in a woven form or non-woven form is inserted into the coupling-damping layer, such that the coupling-damping layer maintains with a certain thickness under compression at interfaces and spillage of the gap-filling material is minimized;
the coupling-damping layer can be attached at vibration surface by means of compressive force, wherein the coupling-damping layer is capable of filling up any minor mismatch of the two interfacing surfaces by applying strong compression force to enable plastic flow of the gap-filling material;
the coupling-damping layer is capable of providing adhesive force at vibration interface to connect the vibration object and a device attaching thereon;
the coupling-damping layer is capable of being a gap-filling material to improve vibration transmission passing through uneven interface surfaces;
the coupling-damping layer as a damping layer is capable of being a hysteresis dissipation layer to minimize any reflection of vibration at the interface by hysteresis dissipation to improve overall damping effectiveness.

2. The coupling-damping layer according to claim 1 maintained at a certain thickness by elastic webbing, capable of being a vibration absorption layer in compression and tension direction wherein the compression and/or tension force is over a certain value.

3. The coupling-damping layer according to claim 1 maintained at a certain thickness by elastic webbing , capable of being a damping layer in shearing directions by utilizing the visco-elastic or visco-plastic property of gap filling material to allow energy dissipation and enhancing the energy dissipation in oscillation cycles.

4. At least one coupling-damping layer according to claim 1 or claim 2 installed in a vibration damper **characterized in that** a coupling-damping layer as a vibration coupling layer attached between the vibration surface and surface of vibration damper.

5. At least one coupling-damping layer according to any of claims 1 to 4 installed in a vibration damper in claim 4 further **characterized in that**
a coupling-damping layer as a damping layer is attached on some surfaces of vibration damper to damp the vibration in direction of shearing or compression or tension;
the coupling layer is capable of fine tuning the dynamic property of the vibration damper.

6. A vibration damper in claims 4 and/or 5 can be a tuned mass damper.
